# EUROPEAN PATENT APPLICATION

(11) **EP 1 837 071 A1**
(43) Date of publication of application: **26.09.2007**
(21) Application number: 06006056.3
(22) Date of filing: 23.03.2006
(51) Int. Cl.: B01J 8/00, B01F 15/02, B29C 61/00

(54) **Use of shape memory materials for introducing and/or liberating reactants, catalysts and additives**

(71) Applicant: Mnemoscience GmbH, 52531 Uebach-Palenberg (DE)
(72) Inventor: Lendlein, Andreas, 14167 Berlin (DE)
(74) Representative: Grünecker, Kinkeldey, Stockmair & Schwanhäusser Anwaltssozietät

(57) **Abstract**

The present invention concerns the use of shape memory materials for introducing and/or liberating reactants, catalysts and additives, in particular in chemical reactions.

## Description

The present invention concerns the use of shape memory materials for introducing and/or liberating reactants, catalysts and additives, in particular in chemical reactions.

### Prior art

Shape memory polymers are an interesting class of materials, which have received considerable attention in recent years. Shape memory functionality is the ability of a material to temporarily fix a second shape after an elastic deformation and only recover its original shape after application of an external stimulus. While this effect is one-way, reversible shape changes induced by cooling and heating, i.e. a two-way effect may also be realized.

The advantageous and intriguing properties of these materials are in particular the possibility to initiate a desired change in shape by an appropriate external stimulus, so that an original shape, after deformation, is re-established, and the possibility to deform and program these materials so that highly specific configurations and shape changes can be obtained. The deformed shape is often called the temporary shape in the art. The phenomenon is a functionality and not an inherent material property. The effect/functionality results from a combination of polymer structure and specific functionalization processes.

The first materials known to provide this functionality were metallic shape memory alloys. In the recent past, shape memory polymers have been developed. Typical shape memory polymers are, for example, phase segregated linear block copolymers, having a hard segment and a switching (soft) segment. Important representatives of these types of materials are disclosed in the international publications WO 99/42147 and WO 99/42528. These materials employ as external stimulus for initiating the recovery of the original shape a change in temperature, usually a temperature rise. Shape memory polymers being susceptible to other external stimuli are also known, such as the photosensitive shape memory polymers disclosed in WO 2004/062706.

In the field of chemical reactions it is often difficult to incorporate a reactant, a catalyst or any further additive into a chemical reaction, since it sometimes is desired that the reactant, catalyst or additive is only added at a certain time, which might be difficult due to the fact that the system in which the reaction occurs does not allow a later addition of components to the reaction (such as an engine). In other cases it is often a problem that an added component, needed only at a later stage of the reaction is not sufficiently stable in the reaction system, so that additional means would be favourable allowing the incorporation of this component into the reaction system at the beginning, in suitably protected form enabling the desired liberation at a defined time of the reaction. One example of such a system is an engine of a vehicle using diesel oil. After the initial filling of the tank it is no longer possible or at least feasible to add further components to the diesel oil. However, it might be required to include additives, such as ferrocene into the diesel oil, additives which are however only required when burning the fuel. Such additives however might suffer from the drawback that they are not sufficiently stable (so that additional quantities have to be included to compensate decomposed portions) or that they tend to separate from the reaction mixture (such as diesel fuel). Other reactants, catalysts and additives might be instable for example in humid or oxygen containing circumstances, so that handling problems might occur.

### Object of the present invention and solution provided

Accordingly it is the object of the present invention to provide a solution for the above outlined problems. This object has been solved with the subject matter as defined in the claims and as further illustrated in the present application.

### Detailed description of the invention

The present invention provides means for protecting reactants, catalysts and additives from harmful influences, so that no handling problems occur. Due to the means provided by the present invention it is possible to include a reactant, catalyst and/or additive into a given system without the danger of decomposition and/or separation, as outlined above. At the same time the present invention enables that the reactant, catalyst and/or additive is liberated, i.e. made available for the desired purpose at the desired time using an appropriate external stimulus.

The present invention provides the reactant, catalyst and/or additive either encapsulated in a shape memory material or distributed within a matrix of shape memory material Designated in the following also system). The shape memory material is selected so that the desired protection against degradation etc. is provided, by appropriately selecting for example shape memory materials providing a sufficient oxygen or moisture barrier. Another possibility enabled by the present invention is the provision of reactants, catalysts and/or additives encapsulate or distributed within a shape memory material so that undesired separation within the reaction system is prevented, for example by selecting a suitable density for the encapsulated or matrix distributed reactant, catalyst and/or additive, so that the resultant product remains stably within the reaction system without tendency towards separation (for example an additive for diesel fuel encapsulated in shape memory material so that the encapsulated additive floats in the diesel fuel without tendency to separate). Handling problems are thereby suitably avoided.

Systems as exemplified above can be prepared in any desired size and shape using well known encapsulating methods under due consideration of the specific requirements for the shaping and programming of shape memory polymers. Reference in this respect can again be made to the three international applications mentioned above. As regards the size of such systems it will be well understood that the size depends from the intended use and has to be adapted accordingly. Using the example of the encapsulated fuel additive it will be clear to the skilled person that such a system has to be prepared so that the size of the particle representing the encapsulated additive does not clog any of the parts of the (diesel) engine in which the material is used (and of course the particles themselves must not agglomerate). In any case the present invention envisages systems comprising particle sizes over a broad range, from capsules having a diameter of up to several millimetres, to minute particle sizes ranging down to the low micrometer range.

Liberation of the encapsulated material is possible due to the use of shape memory materials. After being subjected to a suitable external stimulus the shape memory material displays a change, which may be a change in shape, a change in properties such as diffusion properties etc, enabling a liberation of the encapsulated reactant, catalyst and/or additive. Such a change may be a change in shape, leading for example to the opening of spheres encapsulating a reactant, catalyst and/or additive, such as a contraction of a capsule, a change in shape leading to the opening of previously closed pores, or a change in shape leading to the generation of mechanical forces which in turn disrupt membranes encapsulating a reactant, catalyst and/or additive. Another possibility is, as outlined above the use of the shape memory effect to change properties of the encapsulating materials, such as the permeability, so that for example an encapsulated reactant, catalyst and/or additive may migrate out, by diffusion etc.

The stimulus initiating the shape memory effect may be selected under due consideration of the system in which the material is employed. Referring to the above given example of an encapsulated additive in diesel fuel, a suitable external stimulus may be an increase in temperature. In other systems, for example reactors which may be either transparent or which allow the insertion of a light source, light sensitive shape memory materials can be used. In these embodiments the shape memory effect is triggered by irradiation with a suitable light, which preferably does not otherwise interfere with the reaction mixture. Using this approach a desired reactant, catalyst and/or additive may be liberated within the system at the desired time of reaction, without the trouble of adding this reactant, catalyst and/or additive during the reaction.

The present invention accordingly enables a facilitation of the handling of sensitive components and also a greater ease of carrying out a reaction. In particular it is made possible to add components already at the start of a reaction since the encapsulation prevents any detrimental effect with respect to the reaction mixture. The possibility to liberate the encapsulated component in a well defined manner at a desired time further facilitates the handling. Concerning sensitive additive, for example fuel additives, the encapsulation enables a reduction of the required amount of the component since degradation is prevented. At the same time problems such as separation tendencies can be addressed and remedied.

Suitable shape memory materials to be employed in accordance with the present invention may be selected from known materials, including shape memory polymers, compositions, blends, networks, including IPN and semi-IPN, as well as compounds of such materials with further polymers etc. The shape memory materials are selected depending from their intended use and the problems to be addressed, such as moisture sensitivity, tendency towards separation etc. Suitable examples are disclosed in international applications WO 99/42147, WO 99/42528, and WO 2004/062706, which are incorporated herein by reference.

Suitable means for incorporating reactants, catalysts and/or additives into shape memory materials are for example melt mixing (using a kneader, an extruder), solution mixing (using precipitation methods using either solvent evaporation or precipitation using anti-solvents), leading to matrix systems (matrix of shape memory material distributed therein the reactant, catalyst and/or additive) as well as encapsulating methods leading to the encapsulation of reactant, catalyst and/or additive in bulk form within an encapsulating system (for examples pores of a material filled with reactant, catalyst and/or additive and closed with shape memory material). In this respect reference can be made to the common knowledge regarding the preparation of capsules and the incorporation of molecules into matrix polymers.

Suitably the shape memory polymer employed in accordance with the present invention is in its permanent shape when liberating the included additive etc. Accordingly the system comprising the additive etc. encapsulated by or enclosed/distributed within the shape memory polymer comprises the shape memory polymer in its temporary shape, so that the application of the stimulus initiating the shape memory effect leads to the desired change liberating the additive etc. Such a system may be prepared by loading the shape memory polymer with the desired additive either by swelling in a suitable solution or by mechanical blending processes, followed by deforming the shape memory polymer to the temporary shape, so that the desired encapsulation/enclosure/distribution is achieved. One possible alternative is also the provision of the shape memory polymer in sheet form (permanent shape) which is then deformed, for example under warming conditions, to provide capsules etc. which are, at the same time filled with the desired additive, followed, after closing the capsule, by cooling, so that the temporary shape (the capsule) is fixed. Accordingly the shaping and filling process includes already the programming of the shape memory polymer. This is an example of using an shape memory polymer being sensitive towards a change in temperature. This method may be adapted to enable also the use of other shape memory polymers being sensitive towards a different type of external stimulus. Thereby filled capsules or the like are provided, wherein the shape memory polymer is present in its temporary shape. Initiating the shape memory effect in this embodiment leads to the disruption of the capsule since the polymer returns to the permanent shape (sheet form) liberating the enclosed additive etc.

In analogous manner it is possible to program a material filled with additive etc. wherein the liberation occurs by means of a change of permeability, diffusion behaviour etc.

## Claims

1. Shape memory material, comprising a reactant, catalyst and/or additive which may be liberated within a reaction system after being subjected to an external stimulus initiating a shape memory effect.

2. Shape memory material according to claim 1, wherein the reactant, catalyst and/or additive is distributed within a matrix of the shape memory material.

3. Shape memory material according to claim 1 or 2, wherein the reactant, catalyst and/or additive is selected from the group of fuel additives.

4. Shape memory material according to claim 1, wherein the reactant, catalyst and/or additive is present in bulk form encapsulated by the shape memory material.

5. Shape memory material according to any of claim 1 to 4, wherein the shape memory material shows a shape memory effect which is temperature dependent.

6. Method of liberating a reactant, catalyst and/or additive in a reaction, comprising the introduction of a shape memory material according to any of claims 1 to 5 into the reaction and liberating the contained reactant, catalyst and/or additive by triggering the shape memory effect.

7. Method according to claim 6, wherein the reaction is the combustion of fuel within an engine and the reactant, catalyst and/or additive is selected from fuel additives.

8. Method according to claim 6, wherein the reaction is a one pot multi step synthesis wherein the reactant, catalyst and/or additive contained in the shape memory material is liberated only after completion of at last the first step of the multi step synthesis.
